# EUROPEAN PATENT APPLICATION

(11) **EP 3 604 569 A1**
(43) Date of publication of application: **05.02.2020**
(21) Application number: 18771217.9
(22) Date of filing: 22.03.2018
(51) Int. Cl.: C22B 23/00, B01D 61/14, B01D 63/02, B01J 45/00, B01J 49/50, C22B 3/06, C22B 3/08, C22B 3/26, C22B 3/42, C22B 3/44, C22B 59/00

(54) **METHOD FOR SMELTING METAL OXIDE ORE**

(30) Priority: 22.03.2017 JP 2017056607
(71) Applicant: Sumitomo Metal Mining Co., Ltd., Tokyo 105-8716 (JP)
(72) Inventor: HARA Kenji, Tokyo 105-8716 (JP); IWAMOTO Tomio, Tokyo 105-8716 (JP)
(74) Representative: Jones, Nicholas Andrew
(86) International application number: PCT/JP2018/011357
(87) International publication number: WO 2018/174148

(57) **Abstract**

Provided is a method for smelting a metal oxide ore for obtaining a metal sulfide, wherein the method makes it possible to efficiently recover a fine metal sulfide included in an overflow solution and reduce the recovery cost of metal components when concentrating and separating a metal sulfide using a thickener or other precipitation separation device. The present invention pertains to a method for smelting a metal oxide ore containing nickel and cobalt, wherein the method has: a step S1 for performing pressurized acid leaching of a metal oxide ore and obtaining an acidic solution of nickel and cobalt; a step S2 for neutralizing the acidic solution; a step S3 for carrying out a sulfurization process by adding a sulfurizing agent to a neutralized final solution, and obtaining a slurry of a mixed sulfide of nickel and cobalt; a step S4 for precipitating and separating the mixed sulfide from the slurry of the mixed sulfide; and a step S5 for microfiltering an overflow solution from which the mixed sulfide has been separated, and obtaining microparticles and a filtrate of the mixed sulfide remaining in the overflow solution. Furthermore, the microparticles of the mixed sulfide obtained using microfiltration are added to the neutralized final solution to be sulfurized.

## Description

### TECHNICAL FIELD

The present invention relates to a smelting method for obtaining a mixed sulfide of nickel and cobalt from a metal oxide ore containing nickel and cobalt.

### BACKGROUND ART

Based on a sulfate aqueous solution obtained by subjecting a metal oxide ore containing nickel and cobalt to pressurized acid leaching, a mixed sulfide of nickel and cobalt, which is precipitated and generated by adding a sulfurizing agent to the sulfate aqueous solution, is recovered by subjecting a suspension containing the mixed sulfide (hereinafter, simply referred to as "sulfide slurry") to a precipitation separation process using a precipitation separation device such as a thickener.

More specifically, in the precipitation separation process using the precipitation separation device, a metal sulfide that is a precipitate of the sulfide slurry obtained by a sulfurization reaction is recovered from the bottom portion of the device; meanwhile, aqueous solution components in the sulfide slurry are overflowed and recovered as an overflow solution to form a barren liquor.

At this time, in a conventional precipitation separation process, a large amount of fine floating solid component is contained in an overflowing barren liquor. This floating solid component is composed of a fine metal sulfide remaining in the aqueous solution, and does not become a precipitate but is overflowed and transferred to the barren liquor without any changes, and the floating solid component is subjected to a final neutralization process or the like to be discharged as a tailing residue outside the plant along with a pressurized acid leach residue of metal oxide ore. For this reason, the floating solid component composed of the fine metal sulfide remaining in the overflow solution and discharged outside the system is lost at the time of recovering metal components.

For example, Patent Document 1 discloses, as a method for reducing the recovery loss of metal components, a method in which some of a metal sulfide recovered from the bottom portion of a precipitation separation device such as a thickener is sorted to adjust a particle size and is repeated as seed crystals to a sulfurization reaction step so that fine floating solid component contained in the overflow solution of the precipitation separation device such as a thickener is reduced.

However, even by such a method, the fine floating solid component contained in the overflow solution from the precipitation separation device remains at a slurry concentration of about 50 mg/L.

In general, the average particle size of a metal sulfide recovered from the bottom portion of the precipitation separation device such as a thickener is 10 µm to 100 µm, but the average particle size of the fine floating solid component in the overflow solution is 1 µm or less, so that increasing of the recovery rate by proceeding of precipitation of the floating solid component is accompanied by an increase in size of the precipitation separation device such as a thickener, which is realistically difficult.

From such circumstances, a method for improving the recovery rate of a fine floating solid component remaining in an overflow solution and reducing the recovery loss of metal components is required.

Patent Document 1: Japanese Unexamined Patent Application, Publication No. 2013-043996

### DISCLOSURE OF THE INVENTION

### Problems to be Solved by the Invention

The present invention has been proposed in view of the circumstances as described above, and an object thereof is to provide a method for smelting a metal oxide ore for obtaining a metal sulfide, the smelting method being capable of efficiently recovering a fine metal sulfide contained in an overflow solution and reducing the recovery loss of metal components when a metal sulfide is concentrated and separated using a precipitation separation device such as a thickener.

### Means for Solving the Problems

The present inventors have conducted intensive studies to solve the aforementioned problems. As a result, the present inventors have found that by subjecting an overflow solution containing fine particles of a metal sulfide to microfiltration using a filtration membrane such as a hollow fiber membrane having a predetermined pore size, the fine metal sulfide can be efficiently recovered, and by repeating the recovered metal sulfide to a step of a sulfurization process, the recovery loss of metal components can be effectively reduced as the smelting method, thereby completing the present invention.
(1) A first invention of the present invention is a method for smelting a metal oxide ore containing nickel and cobalt, the method including a leaching step for subjecting the metal oxide ore to pressurized acid leaching to obtain an acidic solution of nickel and cobalt, a neutralization step for subjecting the acidic solution to a neutralization process, a sulfurization step for carrying out a sulfurization process by adding a sulfurizing agent to a resultant neutralized final solution to obtain a slurry of a mixed sulfide of nickel and cobalt, a precipitation separation step for precipitating and separating the mixed sulfide from the slurry of the mixed sulfide, and a microfiltration step for microfiltering an overflow solution from which the mixed sulfide has been separated to obtain microparticles and a filtrate of the mixed sulfide remaining in the overflow solution.
(2) A second invention of the present invention is the method for smelting a metal oxide ore in the first invention, in which the microparticles of the mixed sulfide obtained by microfiltration in the microfiltration step are added to the neutralized final solution to be subjected to the sulfurization process in the sulfurization step.
(3) A third invention of the present invention is the method for smelting a metal oxide ore in the first or second invention, in which in the microfiltration step, the microfiltration is performed using a hollow fiber membrane having a pore size of 0.2 µm or less.
(4) A fourth invention of the present invention is the method for smelting a metal oxide ore in any one of the first to third inventions, in which in the leaching step, the pressurized acid leaching is performed using sulfuric acid.
(5) A fifth invention of the present invention is the method for smelting a metal oxide ore in any one of the first to fourth inventions, in which the slurry of the mixed sulfide obtained in the sulfurization step is depressurized and the sulfurizing agent used in the sulfurization process is recovered.
(6) A sixth invention of the present invention is the method for smelting a metal oxide ore in any one of the first to fifth inventions, in which the sulfurizing agent is hydrogen sulfide gas.
(7) A seventh invention of the present invention is the method for smelting a metal oxide ore in any one of the first to sixth inventions, in which the metal oxide ore is nickel oxide ore containing scandium, and the filtrate obtained in the microfiltration step is used as a raw material for recovering scandium.
(8) An eighth invention of the present invention is the method for smelting a metal oxide ore in any one of the first to sixth inventions, in which the metal oxide ore is nickel oxide ore containing scandium, the smelting method further includes a scandium recovery step for recovering scandium from the filtrate obtained in the microfiltration step, and the scandium recovery step includes an ion exchange step for causing the filtrate to flow through an ion-exchange resin, a concentration step for subjecting an eluate eluted from the ion-exchange resin to a concentration process, a solvent extraction step for subjecting a solution obtained through the concentration process to a solvent extraction process, and a scandium oxide recovery step for recovering scandium oxide from a solution containing scandium obtained through the solvent extraction process.

### Effects of the Invention

According to the present invention, it is possible to provide a method for smelting a metal oxide ore for obtaining a metal sulfide, the smelting method being capable of efficiently recovering a fine metal sulfide contained in an overflow solution and reducing the recovery loss of metal components when a metal sulfide is concentrated and separated using a precipitation separation device such as a thickener.

### BRIEF DESCRIPTION OF THE DRAWINGS

Fig. 1 is a process diagram illustrating an example of the flow of a hydrometallurgical method for nickel oxide ore.
Fig. 2 is a process diagram illustrating an example of the flow of the smelting method further including a scandium recovery step.
Fig. 3 is a process diagram illustrating an example of the flow of the scandium recovery step.

### PREFERRED MODE FOR CARRYING OUT THE INVENTION

Hereinafter, the present invention will be described in detail. Incidentally, the present invention can be variously modified within a range not departing from the scope of the present invention.

### <<1. Overview of Method for Smelting Metal Oxide>>

A method for smelting a metal oxide according to the present invention is a method for smelting a metal oxide ore containing nickel and cobalt. Specifically, the method includes a step for subjecting the metal oxide ore containing nickel and cobalt to pressurized acid leaching to obtain an acidic solution of nickel and cobalt, a step for subjecting the acidic solution to a neutralization process, a step for carrying out a sulfurization process by adding a sulfurizing agent to a resultant neutralized final solution to obtain a slurry of a mixed sulfide of nickel and cobalt, and a precipitation separation step for precipitating and separating the mixed sulfide from the slurry of the mixed sulfide. Further, this smelting method is characterized by including a step for microfiltering an overflow solution from which the mixed sulfide has been separated to obtain microparticles and a filtrate of the mixed sulfide remaining in the overflow solution.

According to the method for smelting a metal oxide having such a configuration, valuable metals of nickel and cobalt contained in the metal oxide can be effectively leached and recovered, a fine metal sulfide contained in the overflow solution from which the mixed sulfide of nickel and cobalt has been separated can also be efficiently recovered, and a recovery loss of metal components can be reduced.

Herein, the metal oxide that is a target of the smelting method is not particularly limited, but for example, nickel oxide ore containing nickel and cobalt is exemplified. Incidentally, although described later, the nickel oxide ore as an example of the metal oxide contains scandium along with nickel and cobalt.

Hereinafter, the method for smelting a metal oxide according to the present invention will be described in detail while a case where a process is carried out using nickel oxide ore containing nickel and cobalt and further containing scandium as a metal oxide to be smelted is employed as a specific embodiment (hereinafter, referred to as "the present embodiment").

### <<2. Hydrometallurgical Method for Nickel Oxide Ore>>

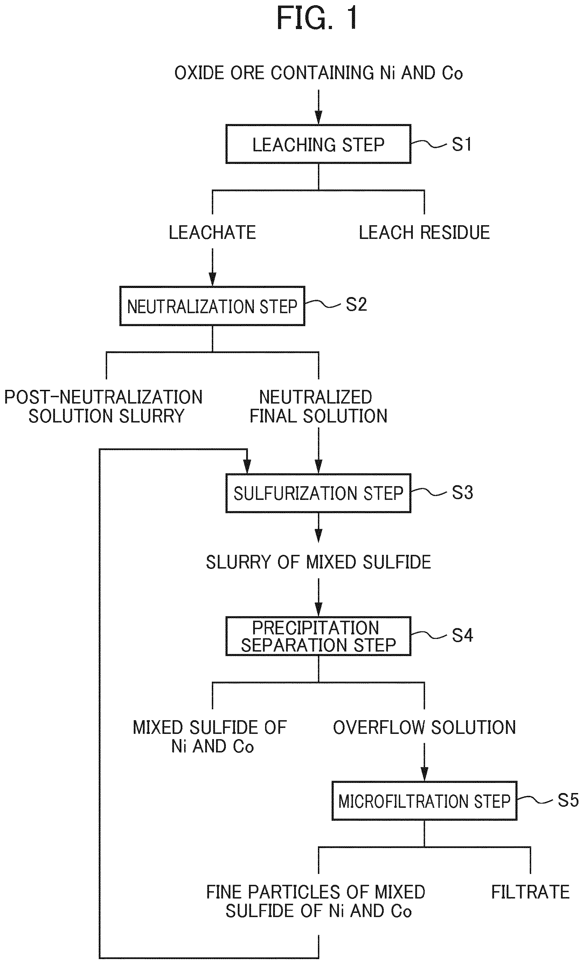

Fig. 1 is a process diagram illustrating an example of the flow of a hydrometallurgical method for nickel oxide ore according to the present embodiment. As illustrated in Fig. 1, this hydrometallurgical method includes a leaching step S1 for subjecting a metal oxide ore containing nickel and cobalt to pressurized acid leaching to obtain an acidic solution of nickel and cobalt, a neutralization step S2 for subjecting the acidic solution to a neutralization process, a sulfurization step S3 for carrying out a sulfurization process by adding a sulfurizing agent to a resultant neutralized final solution to obtain a slurry of a mixed sulfide of nickel and cobalt, a precipitation separation step S4 for precipitating and separating the mixed sulfide from the slurry of the mixed sulfide, and a microfiltration step S5 for microfiltering an overflow solution from which the mixed sulfide has been separated to obtain microparticles and a filtrate of the mixed sulfide remaining in the overflow solution.

### (1) Leaching Step

In the leaching step S1, nickel oxide ore containing nickel and cobalt is subjected to pressurized acid leaching to obtain an acidic solution (leachate) of nickel and cobalt. Specifically, for example, using a high temperature pressurizing container (autoclave) or the like, an acid such as sulfuric acid is added to a slurry of nickel oxide ore and then a stirring process is carried out while being pressurized under a temperature of 240°C to 260°C, thereby generating a leach slurry composed of a leachate and a leach residue. Incidentally, the process in the leaching step S1 can be performed according to the HPAL process that is conventionally known.

Herein, examples of the nickel oxide ore mainly include so-called laterite ore such as limonite ore and saprolite ore. The content of nickel in laterite ore is usually 0.8% by mass to 2.5% by mass, and nickel is contained as a hydroxide or a silica magnesia (magnesium silicate) mineral. Further, scandium is contained in these types of nickel oxide ore.

In the leaching step S1, while the obtained leach slurry composed of a leachate and a leach residue is washed, the leach slurry is subjected to solid-liquid separation into a leachate containing nickel, cobalt, scandium, and the like and a leach residue that is hematite. In this solid-liquid separation process, for example, the leach slurry is mixed with a rinsing liquid and then subjected to the solid-liquid separation process using a solid-liquid separation facility such as a thickener by appropriately adding a flocculant. Specifically, first, the leach slurry is diluted with the rinsing liquid, and then the leach residue in the slurry is concentrated as a precipitate in the thickener. In this solid-liquid separation process, it is preferable that solid-liquid separation tanks such as thickeners are connected in multiple stages and then used, and the leach slurry is subjected to solid-liquid separation while being washed in multiple stages.

### (2) Neutralization Step

In the neutralization step S2, the leachate that is the acidic solution obtained by the leaching step S1 is subjected to a neutralization process. Specifically, the neutralization step is a step for adjusting the pH by adding a neutralizing agent to the leachate to obtain a neutralized precipitate containing impurity elements and a neutralized final solution. By this neutralization process, valuable metals such as nickel, cobalt, and scandium are contained in the neutralized final solution and the majority of impurities including iron and aluminum are contained in the neutralized precipitate.

As the neutralizing agent, a conventionally known neutralizing agent can be used, and examples thereof include calcium carbonate, slaked lime, and sodium hydroxide.

In the neutralization process in the neutralization step S2, the pH is adjusted to be preferably in a range of 1 to 4 and more preferably in a range of 1.5 to 2.5 while oxidation of the separated leachate is suppressed. When the pH is less than 1, neutralization is not sufficient so that there is a possibility that the leachate cannot be separated into the neutralized precipitate and the neutralized final solution. On the other hand, when the pH is more than 4, there is a possibility that not only impurities including aluminum but also valuable metals such as scandium and nickel are contained in the neutralized precipitate.

### (3) Sulfurization Step

The sulfurization step S3 is to perform a sulfurization process by adding a sulfurizing agent to the neutralized final solution obtained by the neutralization step S2 to obtain a slurry of a mixed sulfide of nickel and cobalt.

Specifically, in the sulfurization step S3, a sulfurizing agent such as hydrogen sulfide gas, sodium sulfide, or sodium hydrogen sulfide is added to the obtained neutralized final solution to generate a slurry which contains a sulfide containing nickel and cobalt with few impurity components and a sulfurization final solution in which the nickel concentration is stabilized at a low level and scandium or the like is contained.

Incidentally, zinc as well as nickel and cobalt may be contained in the leachate to be subjected to the sulfurization process in some cases. For example, in such a case, before the mixed sulfide of nickel and cobalt is generated by the sulfurization reaction, a process for recovering zinc as a sulfide by the sulfurization reaction is performed. As the condition of the sulfurization reaction at this time, it is general to perform the sulfurization reaction under the condition alleviated further than the condition of the sulfurization reaction with respect to nickel and cobalt.

### (4) Precipitation Separation Step

In the precipitation separation step S4, the mixed sulfide of nickel and cobalt is precipitated and separated from the slurry of the mixed sulfide obtained by the sulfurization step S3. The precipitation separation process in this precipitation separation step S4 is performed, for example, by a precipitation separation device such as a thickener, and the mixed sulfide of nickel and cobalt is concentrated and precipitated by adding a flocculant to the slurry of the mixed sulfide.

Specifically, in a precipitation separation device such as a thickener, the slurry of the mixed sulfide obtained by the sulfurization process is fed to a precipitation tank, and the mixed sulfide of nickel and cobalt becomes a concentrate on the basis of addition of a flocculant to be precipitated in the bottom portion of the precipitation tank. Then, the concentrated and precipitated mixed sulfide is separated and recovered from the bottom portion of the precipitation tank. Incidentally, from the bottom portion of the precipitation tank, as an underflow, a suspension in which the concentration of the mixed sulfide of nickel and cobalt is concentrated to about 25% by mass to 35% by mass in terms of the slurry concentration is recovered.

On the other hand, aqueous solution components in the slurry of the mixed sulfide are overflowed from the precipitation tank as an aqueous solution from which the mixed sulfide of nickel and cobalt has been separated. The aqueous solution overflowed from the precipitation tank, that is, an overflow solution is, as described above, a clear liquid obtained after the mixed sulfide of nickel and cobalt is separated and a barren liquor in which the concentrations of nickel and cobalt are reduced. In this way, the overflow solution is separated and discharged as a barren liquor from the precipitation separation device.

Incidentally, the barren liquor has a pH of about 1 to 3 and contains impurity elements such as iron, magnesium, and manganese which are contained without being sulfurized.

### (5) Microfiltration Step

In the microfiltration step S5, the overflow solution separated and discharged in the precipitation separation step S4 is microfiltered to obtain microparticles and a filtrate of the mixed sulfide remaining in the overflow solution.

As described above, in the precipitation separation step S4, by the precipitation separation process, for example, using a flocculant, the mixed sulfide of nickel and cobalt and the overflow solution (barren liquor) from which the mixed sulfide has been separated are respectively recovered. However, in the overflow solution, a fine mixed sulfide inferior in precipitation properties may remain, for example, at a ratio of about 50 mg/L in terms of concentrations of nickel and cobalt. Since the overflow solution is separated and discharged from the precipitation separation device, then subjected to a neutralization process or the like, and discharged outside the system, the mixed sulfide of nickel and cobalt composed of fine particles remaining in the overflow solution is also discharged at the same time so that the recovery loss of metal components occurs.

In this regard, in the smelting method according to the present embodiment, a microfiltration step for subjecting the overflow solution separated and discharged from the precipitation separation step S4 to a microfiltration process is provided. In the microfiltration step S5, by microfiltering the separated and discharged overflow solution, the microparticles of the mixed sulfide of nickel and cobalt remaining the overflow solution are separated from a filtrate after the microfiltration to recover microparticles of the mixed sulfide. Then, as illustrated in Fig. 1, the separated and recovered microparticles of the mixed sulfide are added to the neutralized final solution accommodated in a reaction tank in the sulfurization step S3.

According to such a method, fine particles of the mixed sulfide of nickel and cobalt remaining in the overflow solution can be effectively recovered. Specifically, the concentration of nickel and cobalt in the filtrate obtained after the filtration is about 10 mg/L or less. Further, by returning the recovered microparticles of the mixed sulfide to the process in the sulfurization step S3, the recovery loss of metal components can be reduced.

Herein, the particle size of the mixed sulfide of nickel and cobalt contained in the overflow solution is approximately 0.25 µm to 3 µm. Therefore, regarding the microfiltration in the microfiltration step S5, it is preferable that the mixed sulfide having a particle size of about 0.25 µm to 3 µm can be effectively trapped.

Specifically, it is preferable to perform the microfiltration process by using a hollow fiber membrane as a filtration membrane. Further, the pore size of the hollow fiber membrane is preferably 1.0 µm or less, more preferably 0.5 µm or less, and further preferably 0.2 µm or less. By performing the microfiltration using a hollow fiber membrane having a pore size of 1.0 µm or less, many of the mixed sulfide contained in the overflow solution can be trapped so that the recovery loss of metal components can be reduced. Further, particularly, by performing the microfiltration using a hollow fiber membrane having a pore size of 0.2 µm or less, the mixed sulfide having a size of about 0.25 µm to 3 µm contained in the overflow solution can be further reliably trapped so that the recovery loss of metal components can be further reduced.

Incidentally, even in the case of performing the microfiltration using a hollow fiber membrane having a pore size of more than 1.0 µm, for example, about 2.0 µm or less, the mixed sulfide can be trapped at a certain percentage so that the recovery loss of metal components in the smelting method can be reduced. However, as the pore size of the hollow fiber membrane increases, a trap rate of the mixed sulfide is also decreased. Further, as the pore size of the hollow fiber membrane is too small, clogging easily occurs and washing at a high pressure is necessary at the time of backwashing, so that there is a possibility that the process cannot be efficiently performed.

In the microfiltration process, the supply time (supply flow rate) of the overflow solution to a filtration membrane such as a hollow fiber membrane is not particularly limited, but is preferably set depending on the concentration of suspended solids (SS) in the overflow solution such that the SS load for one minute per unit membrane area is 50 mg/L or less. By causing the slurry at such a small flow rate that the SS load is 50 mg/L or less or at a low concentration to flow through the filtration membrane, the filtration process can be performed with the pressure applied to a filtration membrane such as a hollow fiber membrane being not increased too much, so that the filtration membrane is hardly damaged and can be used for a long period of time.

The mixed sulfide of nickel and cobalt is trapped by a filtration membrane such as a hollow fiber membrane and then this filtration membrane is washed to remove the trapped mixed sulfide. The washing process is not particularly limited as long as it can use an acidic solution, but backwashing by a filtrate (clear liquid), which has such a size as not to block the filtration membrane, preferably, does not have a particles larger than the aperture size of the filtration membrane and is recovered by the filtration, is preferred. By such a process such as backwashing, a suspension containing the mixed sulfide of nickel and cobalt, for example, at about 1.5 g/L to 3 g/L in terms of the slurry concentration is obtained.

Further, before the operation of backwashing is performed, for example, by supplying and shaking compressed air is supplied from a supply port of the overflow solution, the removal of the mixed sulfide of nickel and cobalt attached to the surface of the filtration membrane may be promoted.

In this way, in the smelting method according to the present embodiment, by providing the microfiltration step S5, the mixed sulfide of nickel and cobalt distributed in the overflow solution at the time of precipitation and separation can be efficiently recovered. Further, by repeating the suspension containing the mixed sulfide recovered by this microfiltration process to the sulfurization step S3, the retention time of the sulfurization process in the sulfurization step S3 increases, and similarly thereto, the mixed sulfide of nickel and cobalt can be more efficiently recovered so that the recovery loss of metal components can be reduced.

Further, by repeating the fine mixed sulfide recovered by the microfiltration process, the fine particles are further grown, and it is also expected that the particle size of the mixed sulfide obtained by the sulfurization process in the sulfurization step S3 is increased.

Incidentally, the mass of the mixed sulfide of nickel and cobalt added by repeating the recovered mixed sulfide to the sulfurization step S3 is less than 1% with respect to the total of the mass of the mixed sulfide of nickel and cobalt generated by the sulfurization process of the sulfurization step S3 and the mass of the mixed sulfide of nickel and cobalt added by repeating. Therefore, there is no problem of an increase in load of this sulfurization process, or the like.

### (6) Scandium Recovery Step

Further, as described above, the nickel oxide ore to be smelted contains scandium along with nickel and cobalt. The behavior of scandium is similar to that of nickel or the like, and scandium is leached in the leachate in the leaching process (leaching step S1) in the hydrometallurgical process and contained in a neutralized final solution serving as a mother liquor for generating the mixed sulfide in the sulfurization step S3. On the other hand, this scandium does not become the form of a sulfide by the sulfurization process in the sulfurization step S3 but is transferred in the barren liquor (overflow solution). Therefore, scandium, and nickel and cobalt are effectively separated by the aforementioned hydrometallurgical process.

From this point, the filtrate obtained through the microfiltration step S5 is a solution containing scandium that is a valuable metal.

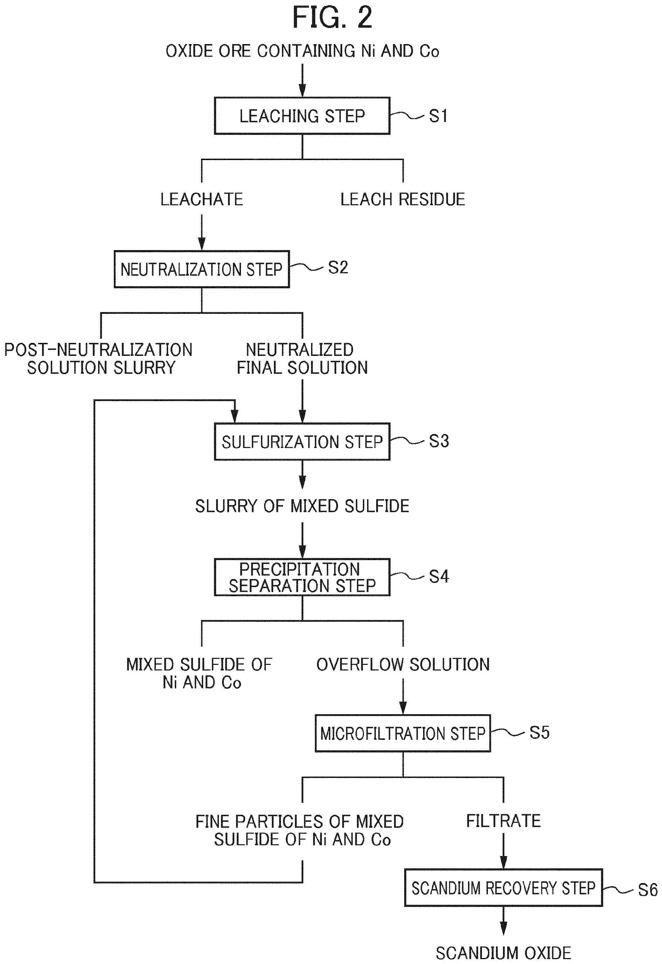

In this regard, in the smelting method according to the present embodiment, a scandium recovery step for recovering scandium from the filtrate obtained through the microfiltration step S5 may be provided. Incidentally, Fig. 2 is a process diagram illustrating an example of the flow of the smelting method further including a scandium recovery step S6.

In this way, in this smelting method, the mixed sulfide of nickel and cobalt can be recovered while the loss is reduced, and by providing the scandium recovery step S6 for recovering scandium from the filtrate obtained by the microfiltration step S5, higher-purity scandium can be efficiently recovered.

That is, as described above, the behavior of scandium is similar to that of nickel or the like. Therefore, upon recovering scandium, in a case where a conventional barren liquor (overflow solution) is used as the recovery raw material, there is a possibility that the fine mixed sulfide of nickel and cobalt remaining in the barren liquor becomes an obstacle to the process for selectively separating and recovering scandium. In this point, according to the smelting method according to the present embodiment, since the smelting method includes the microfiltration step S5, the mixed sulfide of nickel and cobalt remaining in the barren liquor is efficiently recovered, and the concentrations of nickel and cobalt in the filtrate can be effectively reduced, by using the filtrate as the recovery raw material and recovering scandium, the mixed sulfide can be prevented from becoming an obstacle to the process for selectively separating and recovering scandium, so that high-purity scandium can be recovered.

### <<3. Regarding Scandium Recovery Step (Recovery Method of Scandium)>>

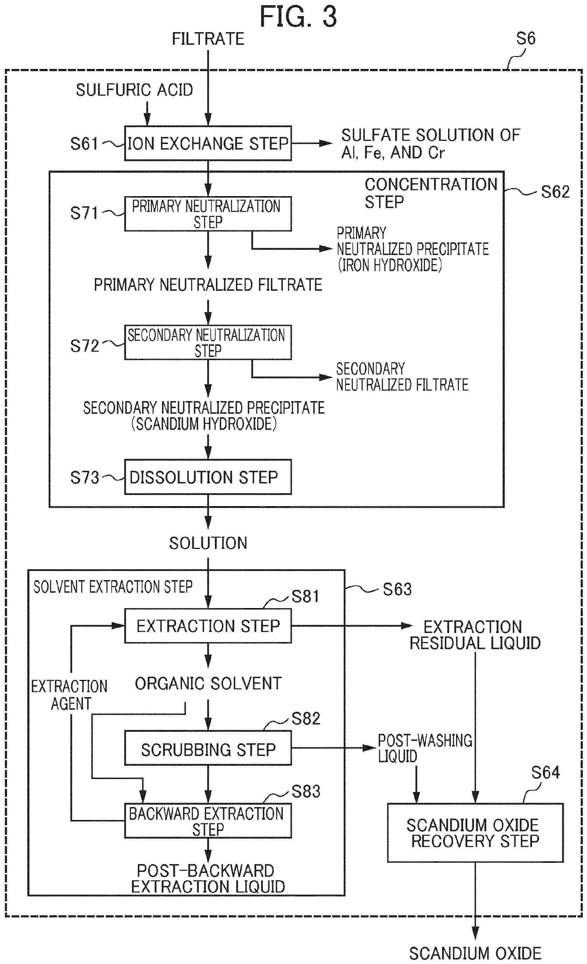

Fig. 3 is a process diagram illustrating an example of the flow of the scandium recovery step S6. As illustrated in Fig. 3, for example, as the scandium recovery step S6, an ion exchange step S61 for causing the filtrate obtained by the microfiltration step S5 to flow through an ion-exchange resin, a concentration step S62 for subjecting an eluate eluted from the ion-exchange resin to a concentration process, a solvent extraction step S63 for subjecting a solution obtained through the concentration process to a solvent extraction process, and a scandium oxide recovery step S64 for recovering scandium oxide from a solution containing scandium obtained through the solvent extraction process can be included.

### [Ion Exchange Step]

The ion exchange step S61 is a step for separating scandium from other impurity components by an ion exchange reaction using a chelate resin to obtain a scandium eluate.

Specifically, examples of the ion exchange step S61 include those including an adsorption step for adsorbing scandium to a chelate resin by bringing the filtrate into contact with the chelate resin, an aluminum removal step for removing aluminum, which has been adsorbed to the chelate resin, by bringing sulfuric acid into contact with the chelate resin, which has adsorbed scandium, a scandium elution step for obtaining a scandium eluate by bringing sulfuric acid into contact with the chelate resin, and a chromium removal step for removing chromium, which has been adsorbed to the chelate resin, by bringing sulfuric acid into contact with the chelate resin undergoing the scandium elution step.

The chelate resin is not particularly limited, but for example, a resin having iminodiacetic acid as a functional group can be used. Further, when scandium, which has been adsorbed to the chelate resin, is eluted (scandium elution step), for example, the process can be performed by bringing sulfuric acid in a concentration range of 0.3 N or more and less than 3 N into contact with the chelate resin. According to this, the scandium eluate in which scandium is concentrated can be efficiently obtained.

### [Concentration Step]

The concentration step S62 is a step for subjecting a scandium eluate obtained through the ion exchange step S61 to a concentration process such as neutralization to remove impurity components, thereby concentrating scandium. As the concentration step S62, for example, as illustrated in Fig. 3, an example in which two-step neutralization process is performed can be mentioned.

Specifically in the two-step neutralization process by pH adjustment, as a primary neutralization step S71, neutralization at the first step for adjusting the pH of the solution to a range of 3.5 to 4.5, preferably, about 4 by adding a neutralizing agent such as sodium hydroxide to the scandium eluate is performed. By this neutralization at the first step, the majority of impurities such as iron and chromium that are components having a lower basicity than scandium become precipitates in the form of hydroxide (for example, iron hydroxide) and are subjected to the solid-liquid separation process such as filtration to be separated into a primary neutralized precipitate and a primary neutralized filtrate.

Next, as a secondary neutralization step S72, neutralization at the second step for adjusting the pH of the filtrate to a range of 5.5 to 6.5, preferably, about 6 by further adding a neutralizing agent such as sodium hydroxide to the primary neutralized filtrate obtained by the neutralization at the first step is performed. By this neutralization at the second step, scandium hydroxide is obtained as a secondary neutralized precipitate, and since nickel having a higher basicity than scandium does not become a precipitate, nickel remains in a secondary neutralized filtrate, so that by performing the solid-liquid separation process such as filtration, the secondary neutralized precipitate, that is, a hydroxide of scandium (scandium hydroxide) from which impurities have been separated can be obtained.

Incidentally, in the process target of the scandium recovery step S6, that is, the filtrate that is the recovery raw material of scandium (filtrate obtained by the microfiltration step S5), since the concentrations of nickel and cobalt are effectively reduced by the microfiltration step S5 that is the prior step, the process of separating scandium from nickel or the like in this concentration step S62 can also be performed at low cost and in a short time.

Next, as a dissolution step S73, the neutralized precipitate (secondary neutralized precipitate) having the scandium hydroxide obtained by the two-step neutralization process as a main component is dissolved by adding an acid to obtain a redissolved solution of scandium. The solution obtained in this way is used as an extraction start solution in the solvent extraction step S63 of the subsequent step. Incidentally, as an acid used for dissolving the neutralized precipitate, sulfuric acid is preferably used. By using sulfuric acid, the obtained solution becomes a solution of scandium sulfate.

### [Solvent Extraction Step]

The solvent extraction step S63 is a step for using the solution (scandium-containing solution) obtained through the concentration step S62 as an extraction start solution and performing a solvent extraction process by bringing this solution into contact with an extraction agent to obtain an extraction residual liquid containing scandium.

An aspect in the solvent extraction step S63 is not particularly limited, but, for example, as illustrated in Fig. 3, it is preferable to perform a solvent extraction process which includes an extraction step S81 for mixing the scandium-containing solution serving as an extraction start solution with an extraction agent serving as an organic solvent and separating the mixture into a post-extraction organic solvent from which impurities and slight scandium are extracted and an extraction residual liquid in which scandium remains, a scrubbing step S82 for mixing a sulfuric acid solution with the post-extraction organic solvent and separating slight scandium extracted by the post-extraction organic solvent into a water phase to obtain a post-washing liquid, and a backward extraction step S83 for adding a backward extraction agent to the washed organic solvent to backward extract impurities from the washed organic solvent.

In the extraction step S81, the scandium-containing solution serving as an extraction start solution is mixed with an organic solvent containing an extraction agent, and impurity components are selectively extracted in the organic solvent, thereby obtaining an organic solvent containing impurities and an extraction residual liquid. The extraction agent is not particularly limited as long as it can selectively extract impurity components, but an amine-based extraction agent can be used. Incidentally, the amine-based extraction agent has properties of selectivity with scandium being low, a neutralizing agent being unnecessary at the time of extraction, and the like, and amine-based extraction agents such as primary amine, secondary amine, and tertiary amine are known.

In the scrubbing (washing) step S82, in a case where scandium slightly co-exists in the organic solvent obtained by extracting impurity components from the scandium-containing solution in the extraction step S81, before the extraction liquid obtained in the extraction step S81 is backward extracted, the organic solvent (organic phase) is subjected to a scrubbing (washing) process to separate scandium into the water phase and recover scandium from the extraction agent. By providing the scrubbing step S82 in this way to wash the organic solvent and separate slight scandium extracted by the extraction agent, scandium in the rinsing liquid can be separated and the recovery rate of scandium can be further increased. Incidentally, as a rinsing solution, a sulfuric acid solution, a hydrochloric acid solution, or the like can be used.

In the backward extraction step S83, from the organic solvent from which impurity components have been extracted in the extraction step S81, the impurity components are backward extracted. Specifically, by adding and mixing a backward extraction solution (backward extraction start solution) to an organic solvent containing an extraction agent, an inverse reaction at the time of the extraction process in the extraction step S81 is caused to backward extract the impurity components, thereby obtaining a post-backward extraction liquid. As the backward extraction solution, for example, a solution containing a carbonate such as sodium carbonate or potassium carbonate can be used. Incidentally, the extraction agent after the impurity components are separated by performing the backward extraction process can be repeatedly used again as the extraction agent in the extraction step S81.

Incidentally, in the aforementioned example in the solvent extraction step S63, the aspect in which scandium is transferred to the extraction residual liquid using an extraction agent having a low selectivity with scandium and the impurity components are removed has been described, but the present invention is not limited thereto. For example, scandium may be separated from the impurity components and transferred to the organic solvent using an extraction agent having a high selectivity with scandium and scandium may be contained in the post-backward extraction liquid by the backward extraction process. In this case, a process target of the scandium oxide recovery step of the subsequent step is the post-backward extraction liquid.

### [Scandium Oxide Recovery Step]

The scandium oxide recovery step S64 is to recover scandium in the form of scandium oxide from the extraction residual liquid obtained in the extraction step S81 in the solvent extraction step S63, and in the case of performing scrubbing in the scrubbing step S82, from a post-washing liquid after scrubbing.

The scandium recovery method is not particularly limited, but known methods can be used, and of them, by using a method for recovering scandium as a precipitate of oxalate by an oxalic acid solution (oxalation process), impurities can be more effectively separated and high-purity scandium can be recovered, which is preferable. Incidentally, as other methods, a method for performing a neutralization process by adding alkali to obtain a precipitate of hydroxide (scandium hydroxide) can also be applied.

Specifically, as the scandium oxide recovery step S64, although not illustrated in the drawing, those including an oxalation step for mixing the extraction residual liquid and the post-washing liquid obtained in the solvent extraction step S63 with a predetermined amount of oxalic acid to precipitate crystals of scandium oxalate and a roasting step for washing the obtained crystals of scandium oxalate with water and drying the crystals of scandium oxalate and then roasting the crystals of scandium oxalate can be exemplified. According to this, scandium oxide containing scandium at a high purity can be recovered.

In particular, in the smelting method according to the present embodiment, the microfiltration step S5 is included and concentrations of nickel and cobalt in the barren liquor are reduced, so that extremely high-purity scandium can be recovered by recovering scandium using the filtrate obtained by the microfiltration step S5.

### EXAMPLES

Hereinafter, the present invention will be described in more detail by means of Examples, but the present invention is not limited to the following Examples at all.

Nickel oxide ore containing nickel and cobalt was used as a raw material and subjected to pressurized acid leaching with sulfuric acid to obtain a leachate (acidic solution) containing nickel and cobalt. Then, hydrogen sulfide gas as a sulfurizing agent was blown into the obtained acidic solution to cause a sulfurization reaction, thereby obtaining a slurry of a mixed sulfide of nickel and cobalt (mixed slurry of the mixed sulfide and the acidic solution). Next, the slurry of the mixed sulfide of nickel and cobalt was loaded into a thickener serving as a flocculation precipitation device and separated into an overflow and an underflow. Incidentally, as the underflow, the slurry of the mixed sulfide of nickel and cobalt was recovered.

Subsequently, an overflow solution obtained by overflowing from the thickener was recovered and subjected to a microfiltration process using a hollow fiber membrane having a pore size of 0.1 µm. The microfiltration process was performed using a filtration device in which a filtration membrane configured by a hollow fiber membrane is attached into an outer container. Incidentally, as the outer container, an outer container, which is provided with a supply and discharge port A for supplying an overflow solution and discharging the mixed sulfide of nickel and cobalt not passing through the hollow fiber membrane, a supply and discharge port B for discharging the filtrate and supplying an acidic solution at the time of washing the filtration membrane, and an air extraction port C, was used.

Specifically, in the microfiltration, after an overflow solution was supplied to the supply and discharge port A and the inside of the outer container was filled with the overflow solution, the air extraction port C was closed to pressurize the inside of the outer container and the overflow solution was caused to pass from the outer surface of the hollow fiber membrane attached to the inside of the container toward the inner side. Then, the filtrate obtained by passing through the hollow fiber membrane passed through a hollow portion of the inside of the hollow fiber membrane and was recovered from the supply and discharge port B of the outer container.

Incidentally, the aforementioned operation was conducted while the pressure (filtration pressure) in the outer container was maintained to 100 kPaG or less and the average flow rate of the overflow solution per unit membrane area was 0.07 m³/Hr or less.

Next, the supply of the overflow solution was stopped once and a backward washing process for causing a clear liquid from the supply and discharge port B to pass from the rear side of the hollow fiber membrane was performed. The start of the backward washing process was performed with a time point at which the average flow rate cannot be maintained to 0.07 m³/Hr or less even in the case of adjusting the filtration pressure to 190 kPaG. By this backward washing process, the mixed sulfide of nickel and cobalt trapped in the surface of the hollow fiber membrane was discharged as a slurry from the supply and discharge port A along with the liquid which was caused to pass through the hollow fiber membrane.

Incidentally, the amount of the clear liquid caused to pass from the rear side of the hollow fiber membrane was set to 0.4 L per unit membrane area. In addition, the supply pressure of the clear liquid at the time of backward washing was set to 100 kPaG to 200 kPaG and the average flow velocity at this time was set to 0.06 m/Hr.

By periodically repeating above operation over 80 days, the recovery of the fine mixed sulfide of nickel and cobalt remaining in the overflow solution of the flocculation precipitation device was continuously performed. In the following Table 1, average values for 80 days of the SS concentration in the overflow solution supplied to the hollow fiber membrane used in the microfiltration and the SS concentration in the filtrate recovered from the filtration device are respectively presented.

**[Table 1]**

| | |
|---|---|
| SS concentration in overflow solution | 56.9 (mg/L) |
| SS concentration in filtrate after microfiltration | 8.80 (mg/L) |

As clearly understood from the results of Table 1, it has found that by subjecting the overflow solution to the microfiltration using a hollow fiber membrane having a predetermined pore size, the fine mixed sulfide of nickel and cobalt in the overflow solution overflowed in the precipitation separation process can be efficiently recovered. From this point, it is considered that by repeatedly returning the recovered mixed sulfide again to the sulfurization process, the recovery loss of nickel and cobalt that are valuable metals can be effectively reduced.

### EXPLANATION OF REFERENCE NUMERALS

- S1: LEACHING STEP
- S2: NEUTRALIZATION STEP
- S3: SULFURIZATION STEP
- S4: PRECIPITATION SEPARATION STEP
- S5: MICROFILTRATION STEP
- S6: SCANDIUM RECOVERY STEP

## Claims

1. A method for smelting a metal oxide ore containing nickel and cobalt, the method comprising:
a leaching step for subjecting the metal oxide ore to pressurized acid leaching to obtain an acidic solution of nickel and cobalt;
a neutralization step for subjecting the acidic solution to a neutralization process;
a sulfurization step for carrying out a sulfurization process by adding a sulfurizing agent to a resultant neutralized final solution to obtain a slurry of a mixed sulfide of nickel and cobalt;
a precipitation separation step for precipitating and separating the mixed sulfide from the slurry of the mixed sulfide; and
a microfiltration step for microfiltering an overflow solution from which the mixed sulfide has been separated to obtain microparticles and a filtrate of the mixed sulfide remaining in the overflow solution.

2. The method for smelting a metal oxide ore according to claim 1, wherein the microparticles of the mixed sulfide obtained by microfiltration in the microfiltration step are added to the neutralized final solution to be subjected to the sulfurization process in the sulfurization step.

3. The method for smelting a metal oxide ore according to claim 1 or 2, wherein in the microfiltration step, the microfiltration is performed using a hollow fiber membrane having a pore size of 0.2 µm or less.

4. The method for smelting a metal oxide ore according to any one of claims 1 to 3, wherein in the leaching step, the pressurized acid leaching is performed using sulfuric acid.

5. The method for smelting a metal oxide ore according to any one of claims 1 to 4, wherein the slurry of the mixed sulfide obtained in the sulfurization step is depressurized and the sulfurizing agent used in the sulfurization process is recovered.

6. The method for smelting a metal oxide ore according to any one of claims 1 to 5, wherein the sulfurizing agent is hydrogen sulfide gas.

7. The method for smelting a metal oxide ore according to any one of claims 1 to 6, wherein the metal oxide ore is nickel oxide ore containing scandium, and
the filtrate obtained in the microfiltration step is used as a raw material for recovering scandium.

8. The method for smelting a metal oxide ore according to any one of claims 1 to 6, wherein the metal oxide ore is nickel oxide ore containing scandium,
the smelting method further comprises a scandium recovery step for recovering scandium from the filtrate obtained in the microfiltration step, and
the scandium recovery step includes
an ion exchange step for causing the filtrate to flow through an ion-exchange resin,
a concentration step for subjecting an eluate eluted from the ion-exchange resin to a concentration process,
a solvent extraction step for subjecting a solution obtained through the concentration process to a solvent extraction process, and
a scandium oxide recovery step for recovering scandium oxide from a solution containing scandium obtained through the solvent extraction process.
